# EUROPÄISCHE PATENTSCHRIFT

(11) **EP 1 500 815 B1**
(45) Veröffentlichungstag und Bekanntmachung des Hinweises auf die Patenterteilung: **18.04.2012**
(21) Anmeldenummer: 04016619.1
(22) Anmeldetag: 15.07.2004
(51) Int. Cl.: B08B 1/00, F03D 1/00, F03D 11/00

(54) **Vorrichtung zum maschinellen Reinigen während des Betriebs eines Rotorblatts einer Windkraftanlage**
Device for the mechanical, in service cleaning of wind turbine blades.
Dispositif pour le nettoyage mécanique des pales d'éolienne pendant le service

(30) Priorität: 19.07.2003 DE 10332876
(43) Veröffentlichungstag der Anmeldung: 26.01.2005
(73) Patentinhaber: Windreich AG, 72649 Wolfschlugen (DE)
(72) Erfinder: Balz, Willi, Dipl.-Wirt.-Ing., 72649 Wolfschlugen (DE); Weiblen, Frank Hermann, Dipl.-Ing., 73765 Neuhausen a.d.F. (DE)
(74) Vertreter: Weiss, Peter

(56) Entgegenhaltungen:
- WO-A-03/048569
- DE-C- 19 726 408
- GB-A- 252 461
- GB-A- 721 987
- GB-A- 740 177
- US-A- 4 873 739

## Beschreibung

Die Erfindung betrifft eine Vorrichtung zum Reinigen mindestens eines Rotorblattes eines Rotors einer Windkraftanlage.

Der Rotor einer Windkraftanlage weist mindestens ein, vorzugsweise mehrere, zueinander winkelversetzt angeordnete Rotorblätter auf, die durch Windanströmung eine Drehung einer Nabe des Rotors bewirken. Die Drehbewegung dient zum Antrieb eines elektrischen Generators zur Erzeugung elektrischer Energie.

Durch den Betrieb kommt es zur Rotorblattverschmutzung, beispielsweise durch Staubablagerungen und durch das Auftreffen von Insekten. Eine Verschmutzung beeinflusst die aerodynamischen Eigenschaften des Rotorblatts und führt möglicherweise zu einer Wirkungsgradverschlechterung. Von Zeit zu Zeit ist daher eine Rotorblattreinigung vorgesehen. Hierzu wird die Windkraftanlage für die Zeit der Reinigung stillgelegt. Mittels eines Hubwagens erhält eine Reinigungskraft Zugang zu dem Stillgesetzten Rotorblatt zur Durchführung einer manuellen Reinigung. Die Reinigungstätigkeit ist aufgrund der beschränkten Zugänglichkeit sehr aufwendig und kann auch immer nur im Griffbereich der Reinigungsperson erfolgen. Ist ein Abschnitt des Rotorblattes gesäubert, so muss zunächst der Hubwagen verlagert werden, um Zugang zum anschliessenden Abschnitt des Rotorblatts zu erhalten.

Das Dokument GB 721 987 A offenbart eine Vorrichtung zum Entfernen von Fliegen oder Ähnlichem von der Oberfläche eines Flugzeugbauteils, insbesondere eines Flugzeugflügels.

Das Dokument WO 03 048569 A offenbart eine Methode und eine Vorrichtung zur Behandlung der Oberfläche eines Rotorblatts einer Windkraftanlage. Die Vorrichtung wird hierbei derart auf das Rotorblatt aufgesetzt, dass sie in Bezug auf die Oberfläche des Rotorblatts verschiebbar ist.

Der Erfindung liegt die Aufgabe zugrunde, die Reinigung eines Rotorblattes effektiver und einfacher zu gestalten.

Es liegt demgemäß eine maschinelle Reinigungsvorrichtung vor, die die Reinigungsarbeit ohne manuelle Hilfe erledigt und die am Rotor angeordnet ist, so dass sie für den Reinigungsvorgang nicht zum Rotor transportiert werden muss und erst dann in Aktion treten kann, sondern sie befindet sich permanent am Rotor und kann daher ohne großen Aufwand in Funktion genommen werden, wobei die Rotorblattreinigung -je nach Ausführungsbeispiel- im Stillstand und/oder während des Betriebs, also bei der Drehung des Rotors, erfolgt.

Für eine Oberflächenbeaufschlagung des Rotorblatts und eine damit einhergehenden Reinigungswirkung ist mindestens ein, am Rotorblatt, insbesondere im Bereich der Blattvorderkante, entlang fahrendes Reinigungselement vorgesehen. Bei dem Reinigungselement kann es sich bevorzugt um einen Schaber handeln, der Ablagerungen mechanisch beaufschlagt und dadurch von der Rotorblattoberfläche entfernt.

Weiter ist mindestens ein, dem Reinigungselement zugeordnetes, die Bewegung des Reinigungselements bewirkendes oder beeinflussendes und/oder den Anlagedruck des Reinigungselements beeinflussendes Strömungselement vorgesehen . Durch die Windbeaufschlagung des Strömungselements wird eine Kraft erzeugt, die der Verlagerung des Reinigungselements entlang der Führung und/oder dem Andruck des Reinigungselements auf die zu reinigende Oberfläche dient.

Nach einer Weiterbildung der Erfindung ist vorgesehen, dass die Vorrichtung am Rotorblatt angeordnet ist, also an dem Bauteil des Rotors, das gereinigt werden soll.

Ferner ist es hilfreich, wenn die Vorrichtung als Blattvorderkanten-Reinigungsvorrichtung ausgebildet ist. Sie reinigt demgemäß die Oberfläche des Rotorblattes nicht über die gesamte Rotorblatttiefe, sondern nur im Bereich der Blattvorderkante. Hier liegt die stärkste Verschmutzung vor, da die anströmende Luft zunächst auf den Bereich der Blattvorderkante trifft und insofern dort mitgeführte Schmutzpartikel, Insekten und so weiter hauptsächlich in diesem vorderen Bereich auf die Rotorblattoberfläche treffen.

Die Reinigungsvorrichtung kann insbesondere als Schwerkraft-Reinigungsvorrichtung ausgebildet sein. Dies bedeutet, dass sie ihre Bewegungsenergie für das Entlangbewegen an dem Rotorblatt in Richtung seiner Längserstreckung durch eine aus der Gravitation resultierenden Gewichtskraft erhält. So ist es beispielsweise möglich, bei nach unten weisendem Rotorblatt die Reinigungseinrichtung von der Nabe in Richtung auf das freie Ende des Rotorblatts verfahren zu lassen. Zeigt das freie Ende des Rotorblattes nach oben, so ist die umgekehrte Bewegungsrichtung möglich, also von der Spitze des Rotorblatts beginnend bis zur Nabe.

Zusätzlich oder alternativ ist es möglich, dass es sich um eine Zentrifugalkraft-Reinigungsvorrichtung handelt. Eine derartige Reinigungsvorrichtung ist während des Drehbetriebs des Rotors in Funktion. Sie bewegt sich entlang der Längserstreckung des Rotorblatts durch die aufgrund der Rotordrehung auftretenden Zentrifugalkraft und erreicht auf diese Art und Weise die zu reinigenden Bereiche des Rotorblatts.

Insbesondere kann eine sich über die Längserstreckung des Rotorblatts erstreckende Führung für eine Verlagerung des Reinigungselements, insbesondere den Schaber, vorgesehen sein. Durch die Führung nimmt das Reinigungselement eine definierte, einen guten Reinigungswirkungsgrad erzielende Stellung am Rotorblatt ein und ermöglicht ferner eine Bewegung entlang der Längserstreckung des Rotorblatts, um sämtliche zu reinigenden Bereiche des Rotorblatts erfassen zu können. Bei der Führung kann es sich insbesondere um eine Drahtseilführung handeln.

Zusätzlich oder alternativ kann mindestens eine Austrittsöffnung oder Austrittsdüse für eine Reinigungs- und/oder Enteisungsflüssigkeit vorgesehen sein. Diese Flüssigkeit benetzt die zu reinigende Fläche oder wird vom Reinigungselement auf die zu reinigende Fläche übertragen, um auf diese Art und Weise den Reinigungsvorgang herbeizuführen oder zu verbessern. Es ist auch denkbar, dass die Reinigung nur mittels der Flüssigkeit erfolgt, also kein zusätzliches Reinigungselement in Form eines Schabers, Reinigungsschwammes oder dergleichen vorgesehen ist. Vorzugsweise kann die Reinigung nach dem Prinzip der Hochdruckreinigung erfolgen, wie sie beispielsweise für Autoscheinwerfer bekannt ist. Um alle Bereiche des Rotorblatts zu erreichen, kann die Flüssigkeits-Reinigungseinrichtung entlang der Führung verfahren werden, wobei -wie bereits vorstehend erwähnt- das Verfahren mittels des Strömungselements erfolgen kann. Zusätzlich oder alternativ kann anstelle des Strömungselements für die Bewegung des Reinigungselements und/oder der Austrittsöffnung oder Austrittsdüse ein entsprechender motorischer Antrieb vorgesehen sein, der eine Bewegung entlang der Führung herbeiführt.

Die Zeichnungen veranschaulichen die Erfindung anhand von Ausführungsbeispielen und zwar zeigt:
- Figur 1: ein Rotor einer Windkraftanlage mit drei, um 120° zueinander winkelversetzten Rotorblättern,
- Figur 2: eine Querschnittsansicht durch ein Rotorblatt gemäß Darstellung der Figur 1,
- Figur 3: einen Querschnitt durch den Bereich der Blattvorderkante eines Rotorblatts und
- Figur 4: eine der Figur 3 entsprechende Darstellung eines weiteren Ausführungsbeispiels.

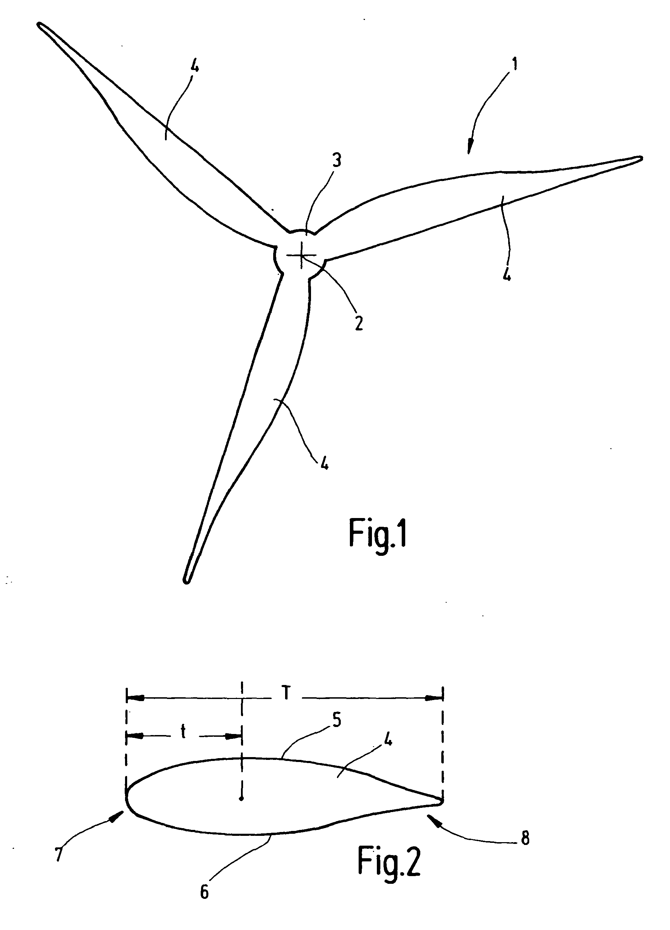

Die Figur 1 zeigt einen Rotor 1 einer nicht dargestellten Windkraftanlage. Der Rotor 1 weist eine um eine Drehachse 2 gelagerte Nabe 3 auf, von der drei Rotorblätter 4 ausgehen.

Die Figur 2 verdeutlicht einen Querschnitt durch eines der Rotorblätter 4. Jedes Rotorblatt 4 weist eine Oberseite 5, eine Unterseite 6, eine Blattvorderkante 7 sowie eine Blatthinterkante 8 auf. Wie der Figur 2 zu entnehmen ist, ist das Profil des Rotorblatts 4 aerodynamisch gestaltet. Unter "Blattvorderkante 7" soll im Zuge dieser Anmeldung nicht nur der vorderste Bereich verstanden werden, sondern es ist ein Teil der Oberseite 5 und ein Teil der Unterseite 4 mit einbezogen. Die Blattvorderkante 7 erstreckt sich gemäß nachfolgender Definition über eine Strecke t, die die Tiefe der Blattvorderkante 7 kennzeichnet. Mit T ist die gesamte Blatttiefe gekennzeichnet. Insbesondere wird die Blattvorderkante 7 beziehungsweise der Bereich der Blattvorderkante 7 durch die Beziehung t/T < 0,4 gekennzeichnet.

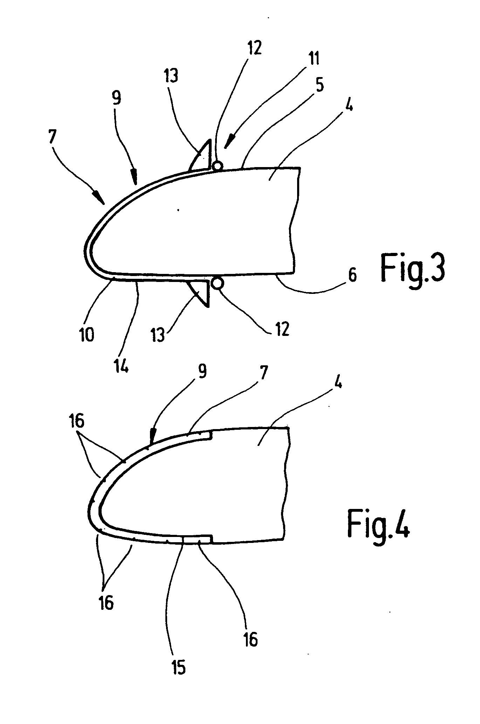

Aus der Figur 3 geht eine Vorrichtung 9 zum Reinigen des Rotorblatts 4 hervor. Die Vorrichtung 9 befindet sich im Bereich der Blattvorderkante 7, das heißt, sie dient der Reinigung dieses Bereichs des Rotorblatts 4, wobei die Reinigung über die gesamte Längserstreckung des Rotorblatts 4 erfolgt. Die Reinigungsvorrichtung 9 ist als flexibler Schaber 10 ausgebildet, der den Bereich der Blattvorderkante 7 aufgrund seiner flexiblen Eigenschaft eng anliegend umspannt und sich dabei an den jeweiligen Profilverlauf des Rotorblatts 4 anschmiegt. Dies ist wichtig, da sich das Profil des Rotorblatts 4 über die Länge, also zwischen Nabe 3 und freier Spitze verändert. Der flächig aufliegende Schaber 10 besteht aus einem relativ dünnen, blattförmigen Material, wobei die Schabwirkung von der Blattkante ausgeübt wird. Der Schaber 10 erstreckt sich nur über ein kurzes Stück der Längserstreckung des Rotorblatts 4. Um seine Reinigungswirkung zu erfalten, muss er über die Längserstreckung des Rotorblatts 4 bewegt werden. Hierzu ist eine Führung 11 in Form von zwei, sich über die Längserstreckung des Rotorblatts 4 erstreckenden Seilzügen oder Seilen 12 vorgesehen. Mittels geeigneter, in Figur 3 nicht dargestellte Befestigungseinrichtungen, zum Beispiel Halteschlaufen, ist der Schaber 10 am Seilzug 12 befestigt, wobei ein Seilzug 12 auf der Oberseite 5 und ein weiterer Seilzug 12 auf der Unterseite 6 des Rotorblatts 4 angeordnet ist. Beide Seilzüge 12 sind in entsprechender Art und Weise derart am Rotorblatt 4 festgelegt, dass der Schaber 10 auf der zu reinigenden Fläche des Rotorblattes 4 aufliegt. Ferner sind der Figur 3 zwei Strömungselemente 13 entnehmbar, die mit dem Schaber 10 verbunden sind und aerodynamisch die Wirkung entfalten, dass der Schaber durch die anströmende Luft fest an das Rotorblatt 4 gedrängt wird, so dass eine gute Schabwirkung erzielt wird und/oder eine Bewegung des Schabers 10 entlang der Längserstreckung des Rotorblatts 4 -geführt durch die Führung 11- erfolgt. Der Vortrieb ist derart eingestellt, dass sich der Schaber 10 mit geringer Geschwindigkeit über die Längserstreckung des Rotorblatts 4 bewegt und dabei die Oberfläche durch Schabwirkung reinigt. Durch entsprechende Ausrichtung des Rotors 1 zum anströmenden Wind ist es möglich, dass sich die Strömungselemente 13 hin- und herbewegen, also aufgrund ihrer Strömungsbeaufschlagung eine Kraft entwickeln, die den Schaber 10 in Richtung Blattspitze oder in Richtung Nabe verlagert.

Alternativ ist es auch möglich, dass die Bewegung des vom Schaber 10 gebildeten Reinigungselements 14 mittels der Seilzüge 12 erfolgt, das heißt, diese sind jeweils schlaufenförmig ausgeführt, so dass sie mittels eines nicht dargestellten Antriebs, der dem Rotorblatt 4 zugeordnet ist, gezogen werden können, wobei sie das Reinigungselement 14 mitnehmen. Bei Drehrichtungsumkehr, wechselt das Reinigungselement 14 seine Verlagerungsrichtung. In einem solchen Falle, verwendet man diese Strömungselemente 13 zur Verbesserung des Anlagedruckes des Reinigungselements 14 auf dem Rotorblatt 4.

Die vorstehenden Reinigungsarbeiten können bei stehendem Rotor 1 oder aber auch beim Betrieb des Rotors 1, also bei dessen Drehbewegung, durchgeführt werden.

Alternativ ist es auch möglich, dass eine Bewegung des Reinigungselements 14 entlang der Längserstreckung des Rotorblatts 4 durch Schwerkraft und/oder Zentrifugalkraft erfolgt. Bei der Schwerkraft-Variante befindet sich der Rotor 1 im Stillstand; bei der Zentrifugalkraft-Variante ist die Drehbewegung des Rotors 1 notwendig, um durch die Zentrifugalkraft die Bewegung des Reinigungselements 14 zu erzielen.

Die Figur 4 zeigt ein Ausführungsbeispiel, bei dem eine Reinigungsvorrichtung 9 im Bereich der Blattvorderkante 7 des Rotorblatts 4 vorgesehen ist, die innerhalb eines Profil-Einsatzes 15 Austrittsöffnungen oder Düsen 16 für eine Flüssigkeit, insbesondere eine Reinigungsflüssigkeit und/oder eine Enteisungsflüssigkeit aufweist. Soll die Reinigung und/oder Enteisung erfolgen, so tritt aus den Öffnungen beziehungsweise Düsen 16 die Flüssigkeit aus und benetzt die Blattvorderkante 7. Um die gesamte Blattvorderkante 7 über die Längserstreckung des Rotorblatts 4 beaufschlagen zu können, sind -über die Längserstreckung gesehen- mehrfach Reihen von entsprechenden Austrittsöffnungen/Austrittsdüsen 16 vorgesehen. Über rotorblattinterne Zuleitungen wird die Reinigungsflüssigkeit/Enteisungsftüssigkeit mittels einer entsprechenden Pumpe zugeführt. Die Reinigung kann im Stillstand des Rotors 1 oder aber auch bei dessen Drehbewegung erfolgen. Die Flüssigkeitsreinigung ist sowohl singulär einsetzbar als auch kombinierbar mit der Reinigungseinrichtung gemäß dem Ausführungsbeispiel der Figur 3.

## Patentansprüche

1. Vorrichtung (9) zum Reinigen mindestens eines Rotorblatts (4) eines Rotors (1) einer Windkraftanlage, umfassend eine selbsttätige maschinelle Reinigung vornehmende Anordnung der Vorrichtung (9) am Rotor (1) und mindestens ein, am Rotorblatt (4), insbesondere im Bereich einer Blattvorderkante (7) entlangfahrendes Reinigungselement (14), **gekennzeichnet durch** mindestens ein dem Reinigungselement (14) zugeordnetes, die Bewegung des Reinigungselementes (14) bewirkendes oder beeinflussendes und/oder den Anlagedruck des Reinigungselements (14) beeinflussendes Strömungselement (13).

2. Vorrichtung nach Anspruch 1, **dadurch gekennzeichnet, dass** die Vorrichtung (9) am Rotorblatt (4) angeordnet ist.

3. Vorrichtung nach einem der vorhergehenden Ansprüche, **gekennzeichnet durch** die Ausbildung als Blattvorderkanten-Reinigungsvorrichtung.

4. Vorrichtung nach einem der vorhergehenden Ansprüche, **gekennzeichnet durch** eine Schwerkraft-Reinigungsvorrichtung.

5. Vorrichtung nach einem der vorhergehenden Ansprüche, **gekennzeichnet durch** eine Zentrifugalkraft-Reinigungsvorrichtung.

6. Vorrichtung nach einem der vorhergehenden Ansprüche, **dadurch gekennzeichnet, dass** das Reinigungselement (14) ein Schaber (10) ist.

7. Vorrichtung nach einem der vorhergehenden Ansprüche, **gekennzeichnet durch** eine, sich über die Längserstreckung des Rotorblatts (4) erstreckende Führung (11) für eine Verlagerung des Reinigungselements (14), insbesondere den Schaber (10)

8. Vorrichtung nach einem der vorhergehenden Ansprüche, **gekennzeichnet durch** mindestens eine Austrittsöffnung (16) oder Austrittsdüse (16) für eine Reinigungs- und/oder Enteisungsfltissigkeit.

## Claims

1. A device (9) for cleaning at least one rotor blade (4) of a rotor (1) of a wind turbine, including an arrangement of the device (9) on the rotor (1) such that it performs automatic mechanical cleaning, and at least one cleaning element (14) which travels along the rotor blade (4), in particular in the region of a blade leading edge (7), **characterised by** at least one flow element (13) which is associated with the cleaning element (14), brings about or influences the movement of the cleaning element (14) and/or influences the contact pressure of the cleaning element (14).

2. A device according to Claim 1, **characterised in that** the device (9) is arranged on the rotor blade (4).

3. A device according to either of the preceding claims, **characterised by** its construction as a cleaning device for a blade leading edge.

4. A device according to one of the preceding claims, **characterised by** a gravity-fed cleaning device.

5. A device according to one of the preceding claims, **characterised by** a centrifugal force cleaning device.

6. A device according to one of the preceding claims, **characterised in that** the cleaning element (14) is a scraper (10).

7. A device according to one of the preceding claims, **characterised by** a guide means (11) which extends over the longitudinal extent of the rotor blade (4) for the purpose of shifting the cleaning element (14), in particular the scraper (10).

8. A device according to one of the preceding claims, **characterised by** at least one exit opening (16) or exit nozzle (16) for a cleaning and/or de-icing liquid.

## Revendications

1. Dispositif (9) pour le nettoyage d'au moins une pale de rotor (4) d'un rotor (1) d'une éolienne, comprenant une disposition du dispositif (9) au rotor (1) procédant à un nettoyage mécanique automatique et au moins un élément de nettoyage (14) passant le long de la pale de rotor (4), en particulier à l'endroit d'un bord avant de pale (7), **caractérisé par** au moins un élément d'écoulement (13) associé à l'élément de nettoyage (14), provoquant ou influençant le mouvement de l'élément de nettoyage (14) et/ou influençant la pression d'appui de l'élément de nettoyage (14).

2. Dispositif selon la revendication 1, **caractérisé par le fait que** le dispositif (9) est disposé sur la pale de rotor (4).

3. Dispositif selon l'une des revendications précédentes, **caractérisé par** la réalisation sous forme de dispositif de nettoyage de bord avant de pale.

4. Dispositif selon l'une des revendications précédentes, **caractérisé par** un dispositif de nettoyage par gravité.

5. Dispositif selon l'une des revendications précédentes, **caractérisé par** un dispositif de nettoyage par force centrifuge.

6. Dispositif selon la revendication 1, **caractérisé par le fait que** l'élément de nettoyage (14) est un racleur (10).

7. Dispositif selon l'une des revendications précédentes, **caractérisé par** un guide (11), s'étendant au-dessus de l'extension longitudinale de la pale de rotor (4), pour un déplacement de l'élément de nettoyage (14), en particulier du racleur (10).

8. Dispositif selon l'une des revendications précédentes, **caractérisé par** au moins une ouverture de sortie (16) ou tuyère de sortie (16) d'un liquide de nettoyage ou de dégivrage.
